# EUROPÄISCHE PATENTSCHRIFT

(11) **EP 3 057 892 B1**
(45) Veröffentlichungstag und Bekanntmachung des Hinweises auf die Patenterteilung: **02.12.2020**
(21) Anmeldenummer: 14783618.3
(22) Anmeldetag: 10.10.2014
(51) Int. Cl.: B65G 47/91, B65B 7/20

(54) **FÖRDERVORRICHTUNG**
CONVEYING DEVICE
DISPOSITIF TRANSPORTEUR

(30) Priorität: 16.10.2013 DE 102013221031
(43) Veröffentlichungstag der Anmeldung: 24.08.2016
(73) Patentinhaber: Syntegon Packaging Systems AG, 8222 Beringen (CH)
(72) Erfinder: SCHAEUBLE, Tobias, 79777 Ühlingen-Birkendorf (DE)
(74) Vertreter: Daub, Thomas
(86) Internationale Anmeldenummer: PCT/EP2014/071754
(87) Internationale Veröffentlichungsnummer: WO 2015/055529

(56) Entgegenhaltungen:
- EP-A1- 0 398 726
- WO-A1-00/23321
- WO-A1-2011/144867
- DE-A1- 2 612 070
- DE-A1-102012 006 278
- DE-U1- 8 411 650
- NL-A- 7 711 921
- US-A1- 2013 105 036

## Beschreibung

### Stand der Technik

Das Dokument EP0398726 A1 offenbart eine Fördervorrichtung nach dem Oberbegriff des Anspruchs 1. Das Dokument DE102012006278 A1 offenbart ein Verfahren nach dem Oberbegriff des Anspruchs 7.

### Offenbarung der Erfindung

Die Erfindung betrifft eine Fördervorrichtung nach Anspruch 1 und ein Verfahren zum Transport von Verpackungszuschnitten und/oder Behältern nach Anspruch 7. Die Erfindung umfasst demnach eine Fördervorrichtung mit zumindest einer Transporteinheit zum Transport von Verpackungszuschnitten und/oder Behältern in einer Transportrichtung entlang eines Transportwegs, wobei die Transporteinheit zumindest ein entlang einer Teilstrecke des Transportwegs antreibbares Förderelement aufweist.

Zumindest ein Förderelement weist eine Rückseite, die in zumindest einem Betriebszustand dazu vorgesehen ist, Verpackungszuschnitte und/oder Behälter in der Transportrichtung zu ziehen, und eine Vorderseite, die in zumindest einem Betriebszustand dazu vorgesehen ist, Verpackungszuschnitte und/oder Behälter in der Transportrichtung zu schieben, auf. Unter einem "Verpackungszuschnitt" soll in diesem Zusammenhang insbesondere ein Materialzuschnitt verstanden werden, der zur Herstellung einer Verpackung vorgesehen ist. Insbesondere kann der Verpackungszuschnitt als Kartonzuschnitt zur Herstellung einer Schachtel ausgebildet sein und/oder zumindest überwiegend von einem Kartonmaterial gebildet sein. Der Verpackungszuschnitt kann ein ebener, ungefalteter Zuschnitt sein und/oder ein aufgerichteter Zuschnitt. Unter einem "aufgerichteten Zuschnitt" soll in diesem Zusammenhang insbesondere ein Verpackungszuschnitt verstanden werden, der bereits eine dreidimensionale Faltung eines aus dem Verpackungszuschnitt zu bildenden Behälters aufweist, der noch nicht durch Kleben und/oder Stecken von Laschen oder ähnliche geeignete Verbindungstechniken an seinen offenen Seiten und/oder Kanten zu einem Behälter verbunden wurde. Unter einem "Behälter" soll in diesem Zusammenhang insbesondere ein aus dem Verpackungszuschnitt gebildeter Verpackungsbehälter verstanden werden. Insbesondere kann der Behälter zumindest fünf geschlossene Seiten aufweisen. Der Behälter kann bevorzugt auf zumindest einer Seite eine verschließbare Öffnung aufweisen, die dazu vorgesehen ist, ein Einfüllen von Packgut in den Behälter zu ermöglichen. Unter einer "Transportrichtung" soll in diesem Zusammenhang insbesondere eine Richtung eines Transports entlang des Transportwegs von einer Übergabestelle, an der die Verpackungszuschnitte und/oder Behälter der Fördervorrichtung übergeben werden, bis zu einer Abgabestelle, an der die Fördervorrichtung die Verpackungszuschnitte und/oder Behälter an eine nachfolgende Vorrichtung abgibt, verstanden werden. Unter einem "Förderelement" soll in diesem Zusammenhang insbesondere ein Element verstanden werden, das dazu vorgesehen ist, auf Verpackungszuschnitte und/oder Behälter eine Kraft auszuüben, die einen Transport der Verpackungszuschnitte und/oder Behälter bewirkt. Insbesondere kann die Kraft zumindest im Wesentlichen in Transportrichtung wirken. Unter einer "Rückseite" soll in diesem Zusammenhang insbesondere eine Seite des Förderelements verstanden werden, welche zumindest im Wesentlichen entgegen der Transportrichtung ausgerichtet ist und/oder zumindest im Wesentlichen in Richtung der Übergabestelle der Fördervorrichtung zeigt. Unter einer "Vorderseite" soll in diesem Zusammenhang insbesondere eine Seite des Förderelements verstanden werden, welche zumindest im Wesentlichen in der Transportrichtung ausgerichtet ist und/oder zumindest im Wesentlichen in Richtung der Abgabestelle der Fördervorrichtung zeigt. Unter "zumindest im Wesentlichen" soll in diesem Zusammenhang insbesondere eine Abweichung einer mittleren Flächennormale der Vorder- beziehungsweise Rückseite von weniger als 45°, bevorzugt weniger als 30°, besonders bevorzugt weniger als 15°, verstanden werden. Unter "ziehen" soll in diesem Zusammenhang insbesondere ein Transport mittels einer Zugkraft verstanden werden. Unter "schieben" soll in diesem Zusammenhang insbesondere ein Transport mittels einer Schubkraft verstanden werden. Insbesondere kann es bei einem schiebenden Transport möglich sein, dass das Förderelement mehrere in Transportrichtung hintereinander angeordnete Behälter und/oder Verpackungszuschnitte mittels der Schubkraft schiebt. Unter einem "Betriebszustand" soll in diesem Zusammenhang insbesondere ein Zustand verstanden werden, der einen Transport von Verpackungszuschnitten und/oder Behältern zumindest während der Teilstrecke des Transportwegs bewirkt. Das Förderelement kann Verpackungszuschnitte und/oder Behälter transportieren, die relativ zur Transportrichtung vor und/oder hinter dem Förderelement angeordnet sind. Das Förderelement kann besonders vielseitig einsetzbar sein. Eine für eine Transportaufgabe benötigte Anzahl von Förderelementen kann reduziert sein. Die Transporteinheit kann weitere Förderelemente aufweisen, die nur für einen ziehenden Transport mit einer Rückseite oder schiebenden Transport mit einer Vorderseite vorgesehen sind. Förderelemente, die für Transportaufgaben vorgesehen sind, bei denen ein Ziehen und Schieben nicht erforderlich ist, können besonders einfach aufgebaut sein.

Weiter wird vorgeschlagen, dass das Förderelement dazu vorgesehen ist, die Verpackungszuschnitte und/oder Behälter in zumindest eine entlang des Transportwegs angeordnete und/oder an den Transportweg angrenzende Arbeitsstation einzubringen und/oder aus der zumindest einen Arbeitsstation zu entnehmen. Unter "Arbeitsstationen" sollen in diesem Zusammenhang insbesondere Vorrichtungen verstanden werden, die dazu vorgesehen sind, zumindest eine Operation an den Verpackungszuschnitten und/oder Behältern auszuführen. Insbesondere können Arbeitsstationen als Aufrichter und/oder Belader und/oder Verschließer ausgebildet sein. Unter einem "Aufrichter" soll in diesem Zusammenhang insbesondere eine Vorrichtung verstanden werden, die dazu vorgesehen ist, aus einem Verpackungszuschnitt einen Behälter aufzurichten, das heißt zu formen. Unter einem "Belader" soll in diesem Zusammenhang insbesondere eine Vorrichtung verstanden werden, die dazu vorgesehen ist, Produkte und/oder Informationsmaterial und/oder Hilfsmittel in den Behälter einzulegen. Unter einem "Verschließer" soll in diesem Zusammenhang insbesondere eine Vorrichtung verstanden werden, die dazu vorgesehen ist, den bevorzugt mit Produkten gefüllten Behälter zu verschließen. Arbeitsstationen können ebenfalls dazu vorgesehen sein, Verpackungszuschnitte und/oder Behälter zu beschriften und/oder zu markieren und/oder Klebstoffe und/oder weitere Hilfsstoffe auf Verpackungszuschnitte und/oder Behälter aufzubringen und/oder Montageschritte auszuführen. Arbeitsstationen können auch als Speicherstationen ausgebildet sein und/oder Speicherstationen beinhalten. Unter einer "Speicherstation" soll in diesem Zusammenhang eine Vorrichtung verstanden werden, die dazu vorgesehen ist, zumindest einen Verpackungszuschnitt und/oder Behälter oder bevorzugt eine Mehrzahl von Verpackungszuschnitten und/oder Behältern aufzunehmen, zwischenzuspeichern und wieder abzugeben. Unter einer "an den Transportweg angrenzenden Arbeitsstation" soll in diesem Zusammenhang insbesondere eine Arbeitsstation und/oder eine an den Transportweg angrenzende Maschine verstanden werden, die vor oder nach dem Transportweg der Fördervorrichtung angeordnet ist. Das Förderelement kann Verpackungszuschnitte oder Behälter von der angrenzenden Arbeitsstation übernehmen und/oder der angrenzenden Arbeitsstation abgeben. Ein Produktfluss der Fördervorrichtung kann mit weiteren Arbeitsstationen und/oder Maschinen verknüpft werden. Es kann ebenfalls möglich sein, dass das Förderelement dazu vorgesehen ist, eine Mehrzahl in einer Speicherstation zwischengespeicherter Verpackungszuschnitte und/oder Behälter gemeinsam in Transportrichtung zu einer weiteren Arbeitsstation zu transportieren, insbesondere zu schieben. Bevorzugt ist das Förderelement dazu vorgesehen, die Verpackungszuschnitte und/oder Behälter in die Arbeitsstationen zu schieben und/oder zu ziehen und/oder die Verpackungszuschnitte und/oder Behälter aus den Arbeitsstationen herauszuziehen und/oder herauszuschieben. Das Förderelement kann die Verpackungszuschnitte und/oder Behälter effizient von einer Arbeitsstation zu einer nächsten Arbeitsstation transportieren. Die Fördervorrichtung kann besonders geeignet sein, Verpackungszuschnitte und/oder Behälter mit unterschiedlichen Abmessungen besonders flexibel zwischen Arbeitsstationen zu transportieren. Insbesondere können durch Aufrichter, Belader und Verschließer unterschiedliche Behälter hergestellt und/oder gefüllt werden und mit der Fördervorrichtung transportiert werden. Notwendige mechanische Umstellungen an der Fördervorrichtung können besonders einfach sein oder bevorzugt entfallen.

Weiter wird eine Steuereinheit vorgeschlagen, die dazu vorgesehen ist, in zumindest einem Betriebszustand eine Transportbewegung des Förderelements zur Bildung einer Arbeitsbewegung mit der zumindest einen Arbeitsstation zu synchronisieren. Unter einer "Steuereinheit" soll in diesem Zusammenhang eine mechanische und/oder bevorzugt elektrische und/oder elektronische Einheit verstanden werden, die dazu vorgesehen ist, ein Bewegungs- und/oder Geschwindigkeitsprofil des Förderelements zu steuern und/oder zu regeln. Die Steuereinheit kann mechanische Steuermittel und/oder Kulissen umfassen. Bevorzugt kann die Steuereinheit Mittel zur Steuerung und/oder Regelung einer Antriebseinheit umfassen, die dazu vorgesehen ist, das Förderelement entlang des Transportwegs anzutreiben. Unter einer "Arbeitsbewegung" soll in diesem Zusammenhang insbesondere eine Bewegung verstanden werden, die dazu vorgesehen ist, eine Operation der Arbeitsstation am Behälter und/oder Verpackungszuschnitt auszuführen und/oder zu unterstützen. Die Arbeitsbewegung kann insbesondere durch eine Relativbewegung zwischen der Arbeitsstation und/oder einem Werkzeug der Arbeitsstation einerseits und dem mit der Transportbewegung des Förderelements bewegten Behälter und/oder Verpackungszuschnitt andererseits gebildet werden. Unter einem "Synchronisieren" der Transportbewegung mit der Arbeitsbewegung soll in diesem Zusammenhang insbesondere verstanden werden, dass die Transportbewegung so gesteuert und/oder geregelt wird, dass die resultierende Arbeitsbewegung zwischen Behälter und/oder Verpackungszuschnitt und Arbeitsstation und/oder Werkzeug der Arbeitsstation gebildet wird. Insbesondere kann das Förderelement dazu vorgesehen sein, Verpackungszuschnitte und/oder Behälter mit einer Bewegungskomponente der Arbeitsbewegung in Transportrichtung anzutreiben und/oder während der Arbeitsbewegung Verpackungszuschnitte und/oder Behälter an die Arbeitsstation abzugeben oder aus der Arbeitsstation zu entnehmen. Die Arbeitsstation kann weitere Bewegungskomponenten der Arbeitsbewegung ausführen. Für Operationen, bei denen die Arbeitsbewegung ausschließlich Bewegungskomponenten senkrecht zur Transportrichtung aufweist, kann die Transportbewegung des Förderelements so mit der Arbeitsstation synchronisiert werden, dass es relativ zur Arbeitsstation in Transportrichtung stillsteht. Die Verpackungszuschnitte und/oder Behälter können in und zwischen den Arbeitsstationen kontinuierlich bewegt werden. Die Transportbewegung kann zumindest eine Bewegungskomponente der Arbeitsbewegungen der Arbeitsstationen bilden. Geschwindigkeitssprünge können vermieden werden und/oder eine Beschleunigung der Verpackungszuschnitte und/oder Behälter kann gering sein. Die Fördervorrichtung kann die Verpackungszuschnitte und/oder Behälter besonders schonend transportieren. Die Verpackungszuschnitte und/oder Behälter können mit einer besonders hohen Geschwindigkeit gefördert werden. Die Fördervorrichtung und/oder eine mit der Fördervorrichtung ausgestattete Verpackungsmaschine können/kann besonders leistungsfähig sein.

Erfindungsgemäß ist das zumindest eine Förderelement in zumindest einem Betriebszustand dazu vorgesehen, gleichzeitig zumindest einen der Verpackungszuschnitte und/oder Behälter mit seiner Rückseite zu ziehen und zumindest einen weiteren der Verpackungszuschnitte und/oder Behälter mit seiner Vorderseite zu schieben. Insbesondere kann das Förderelement einen Verpackungszuschnitt und/oder Behälter mit seiner Vorderseite aus einer Arbeitsstation herausschieben und mit der gleichen Transportbewegung einen entgegen der Transportrichtung folgenden Verpackungszuschnitt und/oder Behälter in die Arbeitsstation hineinziehen. Es sind auch weitere, vorteilhafte Operationen denkbar, in denen ein Förderelement gleichzeitig Verpackungszuschnitte und/oder Behälter zieht und schiebt. Das Förderelement kann mehrere Transportaufgaben gleichzeitig erfüllen. Die Fördervorrichtung kann besonders effizient und/oder kompakt sein.

Weiter werden entlang zumindest einer Teilstrecke des Transportwegs angebrachte Form- und/oder Führungsmittel vorgeschlagen, die dazu vorgesehen sind, Verpackungszuschnitte und/oder Behälter umzuformen und/oder zu führen. Um die Verpackungszuschnitte und/oder Behälter entlang des Transportwegs gegen eine Gewichtskraft abzustützen, kann sich ein Boden und/oder Band zumindest teilweise entlang des Transportwegs erstrecken. Ein Abstützen einer Gewichtskraft der Verpackungszuschnitte und/oder Behälter durch das Förderelement kann entfallen. Weiter können sich Seitenführungen entlang des Transportwegs erstrecken, die dazu vorgesehen sind, mit den Verpackungszuschnitten und/oder Behältern einen Formschluss zu bilden, um ein Ausweichen der Verpackungszuschnitte und/oder Behälter quer zur Transportrichtung und zur Gewichtskraft zu verhindern oder zumindest einzuschränken. Weiter können Führungen, insbesondere Führungsbleche und/oder Führungsschienen, dazu vorgesehen sein, Kanten der Verpackungszuschnitte und/oder Behälter zu führen und in eine gewünschte Position zu bringen und/oder in einer gewünschten Position zu halten. Insbesondere können Führungsbleche und/oder Führungsschienen Kanten von Laschen und/oder Deckelteilen der Behälter so führen, dass Öffnungen der Behälter zugänglich sind und ein Einlegen von Packgut in die Behälter erleichtert wird. Die Führungsbleche und/oder Führungsschienen können eine als "Shoehorn" bezeichnete Einführhilfe für Packgut bilden, indem sie Öffnungen der Behälter zugänglich halten und/oder Packgut bezüglich der Öffnungen zentrieren. Die Einführhilfen können auch beweglich gelagert und/oder angetrieben sein, um in einer Öffnungsbewegung Laschen des Behälters so zu bewegen, dass sich die Öffnung des Behälters weiter vergrößert und/oder das Einführen von Packgut weiter erleichtert wird. Die Führungsbleche und/oder Führungsschienen können insbesondere an Teilstrecken des Transportwegs zwischen Arbeitsstationen und/oder im Bereich von Arbeitsstationen angeordnet sein. Die Form- und/oder Führungsmittel können den Transport von Verpackungszuschnitten und/oder Behältern wirkungsvoll unterstützen. Die Form- und/oder Führungsmittel können Operationen der Arbeitsstationen erleichtern.

In einer bevorzugten Ausgestaltung der Erfindung wird vorgeschlagen, dass das zumindest eine Förderelement dazu vorgesehen ist, unter Einwirkung der Form- und/oder Führungsmittel während des Transports entlang einer Teilstrecke des Transportwegs aus den Verpackungszuschnitten die Behälter zu formen und/oder die Behälter zu verschließen. Insbesondere können zwischen einer als Kartonmagazin ausgebildeten ersten Arbeitsstation und einer weiteren Arbeitsstation Form- und/oder Führungsmittel so angeordnet sein, dass die Verpackungszuschnitte während des Transports von Verpackungszuschnitten unter Einwirkung der Transportbewegung zu offenen Behältern aufgerichtet werden. Weiter können im Bereich einer Teilstrecke nach einer Befüllung der Behälter mit Packgut Form- und/oder Führungsmittel angeordnet sein, die Laschen und/oder Deckelteile der Behälter unter Einwirkung der Transportbewegung verschließen. Insbesondere kann das Formen und/oder Verschließen der Behälter in einer kontinuierlichen Bewegung erfolgen. Transportstrecken insbesondere zwischen Arbeitsstationen können wirksam zur Bearbeitung von Verpackungszuschnitten und/oder Behältern genutzt werden. Weitere angetriebene Hilfsmittel zum Formen und/oder Verschließen von Behältern können entfallen.

Die Rückseite des zumindest einen Förderelements weist zumindest ein Halteelement auf, das dazu vorgesehen ist, auf zu ziehende Verpackungszuschnitte und/oder Behälter eine Zugkraft auszuüben. Das Halteelement kann als Greifer ausgebildet sein. Bevorzugt weist das Halteelement eine oder mehrere Saugöffnungen auf. Unter einer "Saugöffnung" soll in diesem Zusammenhang insbesondere eine Öffnung verstanden werden, die mit einem Unterdruck gegenüber einem Umgebungsdruck des Förderelements beaufschlagt werden kann. Verpackungszuschnitte und/oder Behälter können von der Saugöffnung angesaugt und durch eine durch den Unterdruck verursachte Haltekraft gehalten werden. Bevorzugt können die Saugöffnungen Dichtlippen, insbesondere aus einem elastischen Material, aufweisen. Zusätzlich können Tastventile vorgesehen sein, die die Saugöffnungen bei Kontakt mit den Verpackungszuschnitten und/oder Behältern mit einer Unterdruckquelle verbinden. Es ist ebenfalls möglich, dass die Saugöffnungen nur entlang Teilstrecken des Transportwegs geöffnet sind, in denen eine Zugkraft zwischen Förderelement und Verpackungszuschnitten und/oder Behältern erforderlich ist. Ein Luftverbrauch der Saugöffnungen kann reduziert werden. Das Förderelement kann die Verpackungszuschnitte und/oder Behälter wirksam ziehend transportieren. Weiter kann das Förderelement auf seiner Vorder- und/oder Rückseite Führungsmittel aufweisen, die dazu vorgesehen sind, Verpackungszuschnitte und/oder Behälter zumindest teilweise in Richtung oder entgegen der Transportrichtung zu umschließen. Die Führungsmittel können geeignet sein, die Verpackungszuschnitte und/oder Behälter bezüglich des Fördermittels zu zentrieren.

Weiter wird vorgeschlagen, dass das zumindest eine Förderelement dazu vorgesehen ist, in zumindest einem Betriebszustand Verpackungszuschnitte und/oder Behälter entgegengesetzt zur Transportrichtung mit seiner Rückseite zu schieben und/oder mit seiner Vorderseite zu ziehen. Insbesondere können an der Vorderseite des Förderelements zu diesem Zweck ebenfalls ein oder mehrere Halteelemente vorgesehen sein. Das Förderelement kann eine Arbeitsbewegung von Arbeitsstationen ausüben und/oder unterstützen, die eine Bewegungskomponente entgegen der Transportrichtung aufweist. Die Fördervorrichtung kann die Verpackungszuschnitte und/oder Behälter besonders flexibel transportieren.

Die Fördervorrichtung umfasst eine Lagereinheit, die dazu vorgesehen ist, das zumindest eine Förderelement an einer Führungseinheit der Transporteinheit für einen Rücktransport des Förderelements entgegen der Transportrichtung aus einem Arbeitsbereich wegklapp- und/oder rückziehbar zu lagern. Unter einer "Führungseinheit" soll in diesem Zusammenhang insbesondere eine Linearführungseinheit der Transporteinheit verstanden werden, die dazu vorgesehen ist, das Förderelement in Transportrichtung antreibbar zu lagern. Unter einem "Arbeitsbereich" soll in diesem Zusammenhang insbesondere ein Bereich entlang des Transportwegs verstanden werden, durch den Verpackungszuschnitte und/oder Behälter transportiert werden und/oder in dem Form- und/oder Führungsmittel und Einrichtungen von Arbeitsstationen angeordnet sind. Das Förderelement kann entgegen der Transportrichtung kollisionsfrei zurück bewegt werden, um einen nächsten Verpackungszuschnitt und/oder Behälter zu übernehmen und in Transportrichtung zu transportieren. Das Förderelement weist einen oder mehrere Sensoren auf, die dazu vorgesehen sind, während des Transports und/oder Rücktransports Verpackungszuschnitte und/oder Behälter im Arbeitsbereich zu erkennen. Dies kann im Stillstand und/oder während der Transportbewegung und/oder Rücktransportbewegung erfolgen. Es kann eine Kontrolle einer Anzahl und/oder Position von Verpackungszuschnitten und/oder Behältern im Arbeitsbereich erfolgen. Störungen können erkannt werden. Eine korrekte Anordnung von Verpackungszuschnitten und/oder Behältern kann überwacht werden.

Besonders vorteilhaft ist eine Mehrzahl von Transporteinheiten seriell entlang des Transportwegs und/oder parallel zum Transportweg angeordnet. Unter einer "seriellen" Anordnung soll in diesem Zusammenhang insbesondere verstanden werden, dass in Transportrichtung nacheinander mehrere Transporteinheiten angeordnet sind. Unter einer "parallelen" Anordnung soll in diesem Zusammenhang insbesondere verstanden werden, dass mehrere Transporteinheiten jeweils zumindest ein Förderelement aufweisen, welches zumindest entlang einer identischen Teilstrecke des Transportwegs antreibbar ist. Bevorzugt sind mehrere Transporteinheiten seriell so angeordnet, dass ein Förderelement einer Transporteinheit Verpackungszuschnitte und/oder Behälter in eine Arbeitsstation einbringen und ein Förderelement einer in Transportrichtung folgenden Transporteinheit Verpackungszuschnitte und/oder Behälter dieser Arbeitsstation entnehmen und weitertransportieren kann. Es können vorteilhaft gleichzeitig mehrere Verpackungszuschnitte und/oder Behälter hintereinander entlang des Transportwegs transportiert werden. Die Verpackungszuschnitte und/oder Behälter können jeweils von einem Förderelement synchron mit einer Arbeitsbewegung und/oder einem Arbeitstakt in die Arbeitsstationen eingebracht und aus den Arbeitsstationen entnommen werden. Es kann möglich sein, Verpackungszuschnitte und/oder Behälter entlang der von seriell angeordneten Transporteinheiten abgedeckten Teilstrecken des Transportwegs unabhängig anzutreiben und mit Arbeitsbewegungen und/oder Arbeitstakten von Arbeitsstationen zu synchronisieren. Weisen bei einer parallelen Anordnung mehrere Transporteinheiten Förderelemente auf, die zumindest entlang einer identischen Teilstrecke des Transportwegs antreibbar sind, kann es möglich sein, entlang dieser Teilstrecke Verpackungszuschnitte und/oder Behälter unabhängig anzutreiben und mit Arbeitsbewegungen und/oder Arbeitstakten von Arbeitsstationen zu synchronisieren. Es ist ebenfalls möglich, dass eine Transporteinheit mehrere Förderelemente aufweist. Bevorzugt können die Förderelemente unabhängig antreibbar sein, beispielweise durch mehrere, unabhängig ausgebildete Riementriebe und/oder Linearantriebe. Die Förderelemente können entlang der Transporteinheit Verpackungszuschnitte und/oder Behälter unabhängig antreiben und mit Arbeitsbewegungen und/oder Arbeitstakten von Arbeitsstationen synchronisieren. Vorteile einer seriellen und einer parallelen Anordnung von Transporteinheiten können kombiniert werden. Es kann entlang eines Transportwegs eine Vielzahl von Verpackungszuschnitten und/oder Behältern zu einer Vielzahl von Arbeitsstationen transportiert werden, wobei die Verpackungszuschnitte und/oder Behälter jeweils entlang des Transportwegs unabhängig antreib- und/oder synchronisierbar sind.

Das Verfahren nach Anspruch 7 beinhaltet, dass ein oder mehrere Förderelemente jeweils einen oder mehrere Verpackungszuschnitte und/oder Behälter mit ihrer Rückseite ziehend und/oder mit ihrer Vorderseite schiebend entlang eines Transportwegs zwischen Arbeitsstationen transportieren.

Bevorzugt ist eine Verpackungsmaschine, insbesondere eine Kartoniermaschine, mit einer erfindungsgemäßen Fördervorrichtung ausgestattet. Bevorzugt weist die Verpackungsmaschine eine Mehrzahl an Arbeitsstationen auf. Verpackungszuschnitte und/oder Behälter können besonders effizient entlang der Arbeitsstationen transportiert werden. Die Verpackungsmaschine kann besonders leistungsfähig sein.

Die erfindungsgemäße Fördervorrichtung soll hierbei nicht auf die oben beschriebene Anwendung und Ausführungsform beschränkt sein.

### Zeichnungen

Weitere Vorteile ergeben sich aus der folgenden Zeichnungsbeschreibung. In den Zeichnungen sind Ausführungsbeispiele der Erfindung dargestellt.

Es zeigen:
- Fig. 1: eine schematische Darstellung eines Ausschnitts einer Verpackungsmaschine mit einer erfindungsgemäßen Fördervorrichtung mit einem Förderelement, das einen Behälter in einer Transportrichtung zieht,
- Fig. 2: eine schematische Darstellung der Fördervorrichtung mit dem Transportelement, das einen Behälter in eine Arbeitsstation zieht und einen weiteren Behälter aus der Arbeitsstation schiebt,
- Fig. 3: eine schematische Darstellung der Fördervorrichtung bei einem Rücktransport des Förderelements,
- Fig. 4: eine schematische Darstellung eines Schnitts durch die Fördervorrichtung mit Form- und Führungsmitteln,
- Fig. 5: eine schematische Darstellung einer Fördervorrichtung in einem zweiten Ausführungsbeispiel mit einer weiteren, seriell angeordneten Transporteinheit und
- Fig. 6: eine schematische Darstellung eines Ausschnitts einer Verpackungsmaschine mit einer erfindungsgemäßen Fördervorrichtung in einem dritten Ausführungsbeispiel mit zwei parallel angeordneten Transporteinheiten.

### Beschreibung der Ausführungsbeispiele

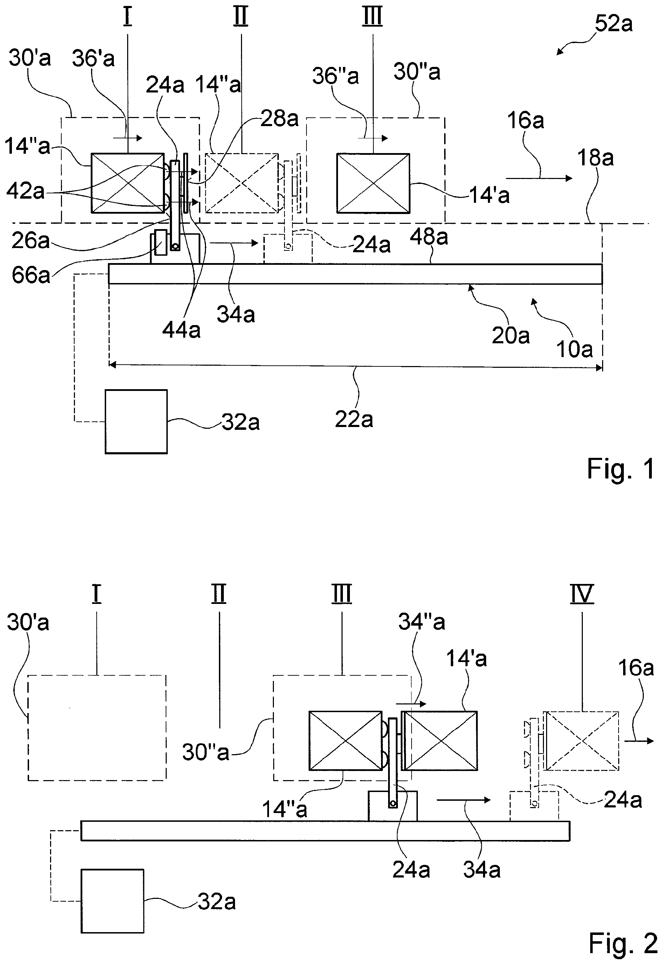

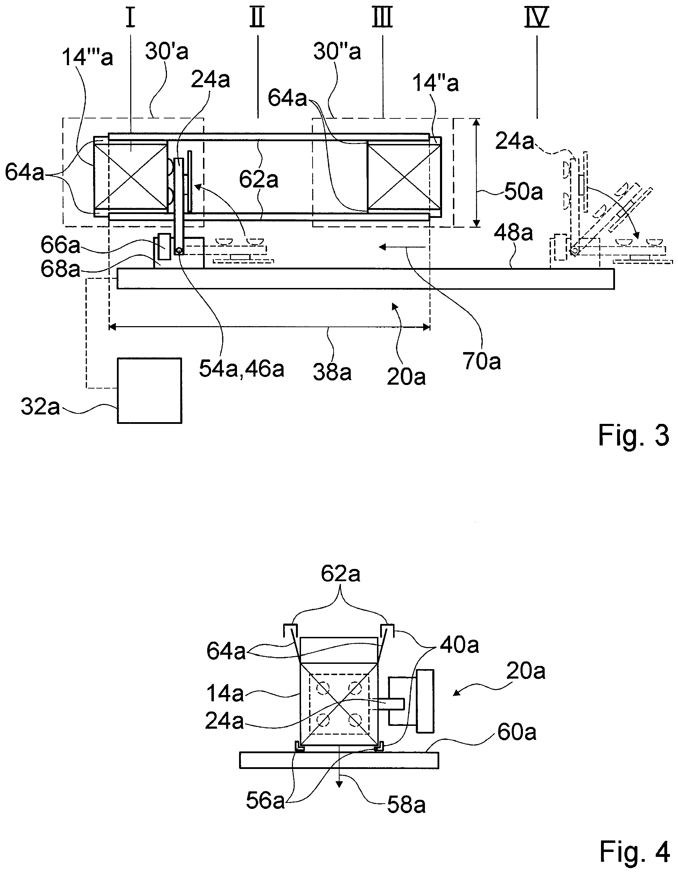

Figur 1 zeigt einen Ausschnitt einer Draufsicht einer Verpackungsmaschine 52a mit einer Fördervorrichtung 10a mit einer Transporteinheit 20a zum Transport von Behältern 14a (Figur 4) in einer Transportrichtung 16a entlang eines Transportwegs 18a, wobei die Transporteinheit ein entlang einer Teilstrecke 22a des Transportwegs 18a antreibbares Förderelement 24a aufweist. Das Förderelement 24a weist eine Rückseite 26a auf, die in einem Betriebszustand dazu vorgesehen ist, Behälter 14a in der Transportrichtung 16a zu ziehen. Das Förderelement 24a weist weiter eine Vorderseite 28a auf, die in einem Betriebszustand dazu vorgesehen ist, die Behälter 14a in der Transportrichtung 16a zu schieben. In Figur 1 sind ein erster Behälter 14'a und ein zweiter Behälter 14"a in zwei Transportphasen dargestellt. Im Beispiel schiebt oder zieht das Förderelement 24a jeweils einen der Behälter 14'a, 14"a. Es ist ebenfalls möglich, dass das Förderelement 24a dazu vorgesehen ist, mehrere nebeneinander angeordnete Behälter 14a zu ziehen und/oder zu schieben und/oder mehrere in Transportrichtung 16a hintereinander angeordnete Behälter 14a zu schieben. Entlang des Transportwegs 18a sind zwei Arbeitsstationen 30'a, 30"a angeordnet, die an den Behältern 14'a, 14"a jeweils eine Operation ausführen, wie das Einlegen von Produkten in den jeweiligen Behälter 14'a, 14"a. Das Förderelement 24a ist dazu vorgesehen, die Behälter 14'a, 14"a in die entlang des Transportwegs 18a angeordneten Arbeitsstationen 30'a, 30"a einzubringen und aus den Arbeitsstationen 30'a, 30"a zu entnehmen. Eine Steuereinheit 32a ist dazu vorgesehen, in einem Betriebszustand eine Transportbewegung 34a des Förderelements 24a zur Bildung der Arbeitsbewegungen 36'a, 36"a mit den Arbeitsstationen 30'a, 30"a zu synchronisieren. Die Steuereinheit 32a steuert zu diesem Zweck eine nicht näher dargestellte Antriebseinheit des Förderelements 24a der Transporteinheit 20a, so dass die Transportbewegung 34a eine Geschwindigkeitskomponente der Arbeitsbewegungen 36'a, 36"a der Arbeitsstationen 30'a, 30"a bildet. Geschwindigkeitsprofile der Transportbewegung 34a können entsprechend der Transportaufgabe und/oder den Anforderungen der Arbeitsstationen 30'a, 30"a angepasst werden.

In Figur 1 ist ein erster Transportschritt dargestellt. Das Förderelement 24a zieht den entgegen der Transportrichtung 16a gesehen zweiten Behälter 14"a von einer Position I aus der Arbeitsstation 30'a in einen Bereich zwischen den beiden Arbeitsstationen 30'a und 30"a zu einer Position II. Der erste Behälter 14'a befindet sich bereits in der zweiten Arbeitsstation 30"a. Die Übernahme des Behälters 14"a in der Position I erfolgt synchron mit der Arbeitsbewegung 36'a der Arbeitsstation 30'a. Die der Transportrichtung 16a zugewandte Rückseite 26a des Förderelements 24a weist Halteelemente 42a auf, die dazu vorgesehen sind, auf den zu ziehenden Behälter 14"a eine Zugkraft 44a auszuüben. Die Halteelemente 42a sind als Saugnäpfe ausgebildet, die über eine nicht näher dargestellte Unterdruckquelle und Druckleitung mit einem Unterdruck beaufschlagt sind.

In einem zweiten, in Figur 2 dargestellten Transportschritt zieht das Förderelement 24a in einer Position III gleichzeitig den Behälter 14"a mit seiner Rückseite 26a in die Arbeitsstation 30"a hinein und schiebt in der gleichen Transportbewegung 34a den Behälter 14'a aus der Arbeitsstation 30"a heraus. Dazu wird eine Geschwindigkeit der Transportbewegung 34a zunächst zu einer verlangsamten Transportbewegung 34"a reduziert, so dass der Behälter 14'a mit einer geringen Geschwindigkeit kontaktiert wird und ein harter Aufprall des Förderelements 24a auf den Behälter 14'a vermieden wird. Die Geschwindigkeit der Transportbewegung 34a wird nun wieder erhöht, um den Behälter 14'a weiter in Transportrichtung 16a zu bewegen. Der Behälter 14"a wird gleichzeitig weiter in die Arbeitsstation 30"a gezogen, bis er die Position III erreicht hat. Nun wird ein Druck im Halteelement 42a durch Belüftung der Saugnäpfe an einen Umgebungsdruck angeglichen, so dass die Zugkraft 44a aufgehoben wird und der Behälter 14"a in Position III verbleibt. Um den Behälter 14"a in Position III zu arretieren, können weitere, hier nicht dargestellte Mittel vorgesehen sein, wie zum Beispiel Saugnäpfe, Vakuumplatten und/oder bewegliche Anschlagmittel. In der Folge schiebt das Förderelement 24a den Behälter 14'a weiter in eine Position IV.

Das Förderelement 24a ist mit einer Lagereinheit 46a an einer Führungseinheit 48a der Transporteinheit 20a angeordnet, wobei die Lagereinheit dazu vorgesehen ist, das Förderelement 24a entgegen der Transportrichtung 16a aus einem Arbeitsbereich 50a wegklappbar zu lagern (Figur 3). Die Lagereinheit 46a lagert das Förderelement 24a um eine Schwenkachse 54a beweglich an einem in und entgegen der Transportrichtung 16a antreibbaren Schlitten 68a der Transporteinheit 20a. Das Förderelement 24a weist einen Sensor 66a auf, der dazu vorgesehen ist, Behälter 14a, die sich im Arbeitsbereich 50a befinden, zu erkennen. Mit Hilfe des Sensors 66a werden beim Vor- und Rücktransport Behälter 14a im Arbeitsbereich erkannt. Es erfolgt eine Kontrolle einer Anzahl und/oder Position von Behältern 14a im Arbeitsbereich 50a. Die Figur 3 zeigt einen auf Figur 2 folgenden Transportschritt. Der Behälter 14'a wurde ausgehend von der Position IV von einem weiteren, hier nicht näher gezeigten, an den Transportweg 18a angrenzenden Transportsystem einer angrenzenden Maschine übernommen und weitertransportiert. Das Förderelement 24a wird um die Schwenkachse 54a der Lagereinheit 46a in Transportrichtung 16a umgeklappt, in einer Rücktransportbewegung 70a zurück in Position I bewegt und um die Schwenkachse 54a wieder aufgestellt, um einen weiteren, in der Arbeitsstation 30'a wartenden Behälter 14"'a zu übernehmen. Anschließend wird der Behälter 14"'a in die Position III zur Arbeitsstation 30"a und der Behälter 14"a in die Position IV entsprechend dem in Figur 2 dargestellten Transportschritt bewegt. Diese Transportschritte wiederholen sich, solange neue Behälter 14a angeliefert werden.

Entlang einer Teilstrecke 38a des Transportwegs 18a sind Form- und Führungsmittel 40a angebracht, die dazu vorgesehen sind, Verpackungszuschnitte zu Behältern 14a umzuformen und zu führen (Figur 4). Die Teilstrecke 38a erstreckt sich von der Arbeitsstation 30'a bis zur Arbeitsstation 30"a. Seitenführungen 56a umschließen zur Transportrichtung 16a parallele Kanten des Behälters 14a und verhindern ein zu einer Schwerkraft 58a und der Transportrichtung 16a senkrechtes seitliches Ausweichen des Behälters 14a. Ein Boden 60a stützt den Behälter 14a gegenüber der Schwerkraft 58a ab. Zwei Deckellaschenführungen 62a sind als U-förmige Führungen ausgebildet und führen zwei zur Transportrichtung 16a parallele Deckellaschen 64a des Behälters 14a. Die Deckellaschenführungen 62a verhindern, dass sich die Deckellaschen 64a in Richtung der Behältermitte neigen und so die Öffnung des Behälters 14a verschließen. Das Einfüllen von Packgut in den Behälter 14a in den Arbeitsstationen 30'a, 30"a wird so erleichtert.

Die nachfolgende Beschreibung und die Zeichnungen zweier weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b und c den weiteren Ausführungsbeispielen nachgestellt.

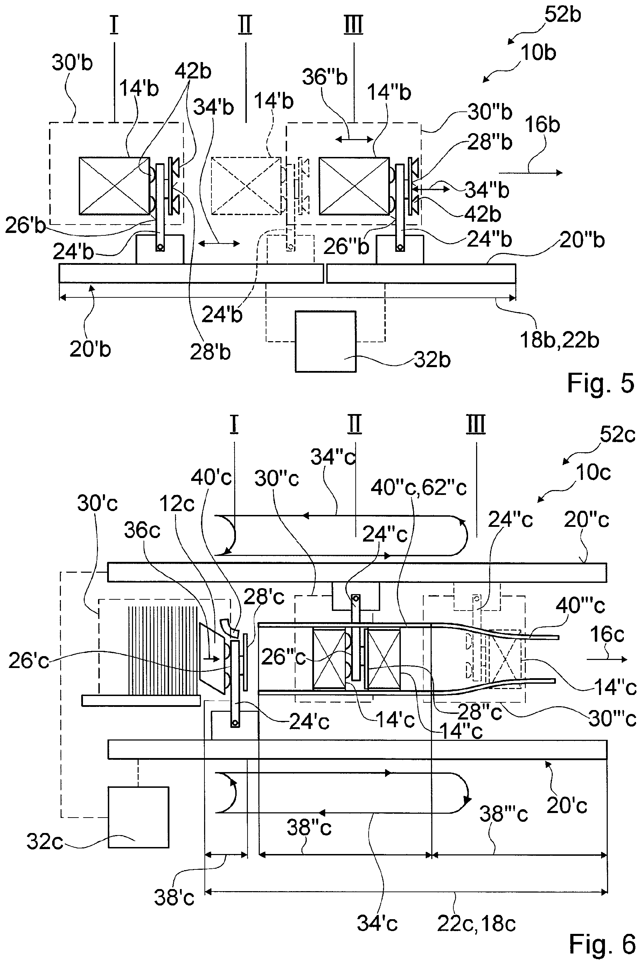

Figur 5 zeigt einen Ausschnitt einer Verpackungsmaschine 52b mit einer Fördervorrichtung 10b zum Transport von Behältern 14'b, 14"b in einer Transportrichtung 16b entlang eines Transportwegs 18b, in einem zweiten Ausführungsbeispiel.

Die Fördervorrichtung 10b des zweiten Ausführungsbeispiels unterscheidet sich von der Fördervorrichtung 10a des ersten Ausführungsbeispiels insbesondere dadurch, dass seriell entlang einer Teilstrecke 22b des Transportwegs 18b eine weitere Transporteinheit 20"b mit einem weiteren Förderelement 24"b angeordnet (Figur 5) ist. Ein erster Behälter 14'b wird von einem Förderelement 24'b einer ersten Transporteinheit 20'b von einer Position I in einer ersten Arbeitsstation 30'b zu einer Position II in Transportrichtung 16b vor eine zweite Arbeitsstation 30"b gezogen. In der Position II befand sich zu diesem Zeitpunkt bereits der Behälter 14"b, der vom Förderelement 24'b beim Transport des Behälters 14'b in die Position II mit seiner Vorderseite 28'b in Richtung einer Position III in die zweite Arbeitsstation 30"b geschoben wird. Der Behälter wird an der Position III vom Förderelement 24"b der zweiten Transporteinheit 20"b übernommen. In einem nächsten Schritt transportiert die zweite Transporteinheit 20"b den Behälter 14'b aus der zweiten Arbeitsstation 30"b heraus und weiter in Transportrichtung 16b. Das Förderelement 24'b der ersten Transporteinheit 20'b kann in dieser Zeit bereits einen nächsten, hier nicht dargestellten Behälter im Bereich der Positionen I und II transportieren. Transportbewegungen 34'b und 34"b der ersten und der zweiten Transporteinheit 20'b, 20"b sind voneinander unabhängig und werden von einer gemeinsamen Steuereinheit 32b gesteuert. Weiter sind die Förderelemente 24'b, 24"b dazu vorgesehen, in einem Betriebszustand die Behälter 14'b, 14"b entgegengesetzt zur Transportrichtung 16b mit ihrer Rückseite 26'b, 26"b zu schieben und mit ihrer Vorderseite 28'b, 28"b zu ziehen. Zu diesem Zweck sind an den Vorderseiten 28'b, 28"b ebenfalls als Saugnäpfe ausgebildete Halteelemente 42b angeordnet. Die Behälter 14'b, 14"b können somit im Bereich der Arbeitsstation 30"b von beiden Förderelementen 24'b, 24"b ziehend und schiebend mit beidseitigen Transportbewegungen 34b bewegt werden, die eine alternierende Arbeitsbewegung 36"b der Arbeitsstation 30"b bewirken. Die Arbeitsstation 30"b legt in den Behältern 14'b, 14"b Produkte in mehreren Reihen und Lagen ab. Die Behälter 14'b, 14"b werden zur Bildung der Reihen, während die Arbeitsstation 30"b Produkte ablegt, in der alternierenden Arbeitsbewegung 36"b hin- und herbewegt. In einem weiteren, in der Figur nicht dargestellten Betriebsmodus schiebt das Förderelement 24'b mit seiner Vorderseite 28'b hier nicht dargestellte Behälter von Position I bis zur Position III. Das Förderelement 24"b kann in einem weiteren Betriebsmodus hier nicht dargestellte Behälter, die sich in Transportrichtung 34b hinter dem Förderelement 24"b befinden, ebenfalls mit seiner Vorderseite 28"b schiebend transportieren.

Figur 6 zeigt einen Ausschnitt einer Verpackungsmaschine 52c mit einer Fördervorrichtung 10c zum Transport von Verpackungszuschnitten 12c und Behältern 14'c, 14"c in einer Transportrichtung 16c entlang eines Transportwegs 18c, in einem dritten Ausführungsbeispiel.

Die Fördervorrichtung 10c des dritten Ausführungsbeispiels unterscheidet sich vom ersten Ausführungsbeispiel insbesondere dadurch, dass zwei Transporteinheiten 20'c, 20"c mit jeweils einem Förderelement 24'c, 24"c entlang einer Teilstrecke 22c parallel zu dem Transportweg 18c angeordnet sind. Die Transporteinheiten 20'c, 20"c werden von einer gemeinsamen Steuereinheit 32c gesteuert und mit den Transportbewegungen 34'c, 34"c entlang des Transportwegs 18c hin- und herbewegt. Die Förderelemente 24'c, 24"c ziehen in einer Position I jeweils abwechselnd als Faltschachtelzuschnitte ausgebildete Verpackungszuschnitte 12c aus einer ersten, als Kartonmagazin ausgebildeten Arbeitsstation 30'c ab und transportieren diese zu Arbeitsstationen 30"c, 30"'c, um die Behälter 14'c, 14"c zu befüllen und zu verschließen. Figur 6 zeigt beispielhaft, wie das Förderelement 24'c einen Verpackungszuschnitt 12c abzieht. Entlang einer Teilstrecke 38'c der Teilstrecke 22c sind Form- und Führungsmittel 40'c angeordnet, die bewirken, dass der Verpackungszuschnitt 12c während einer durch das Förderelement 24'c auf den Verpackungszuschnitt 12c übertragenen Transportbewegung 34'c zu einem im Prozessschritt der Figur 6 nicht dargestellten Behälter aufgerichtet wird. Die Form- und Führungsmittel 40'c sind Teil der Arbeitsstation 30'c. Die Transportbewegung 34'c bewirkt eine Relativbewegung zwischen den Form- und Führungsmitteln 40'c und damit eine Arbeitsbewegung 36c, die das Aufrichten des Verpackungszuschnitts bewirkt. Während oder nach dem Aufrichten werden über ein hier nicht näher dargestelltes Klebstoffdosiersystem Bodenlaschen des Verpackungszuschnitts 12c mit Klebstoff, wie zum Beispiel einem Heißkleber, versehen und umgefaltet. Alternativ kann ein Klebeband angebracht werden, um die Bodenlaschen zu verkleben. Durch das Verkleben der Bodenlaschen wird aus dem Verpackungszuschnitt 12c der als Falt schachtel ausgebildete Behälter geformt. Die in Figur 6 dargestellten Behälter 14'c, 14"c wurden entsprechend geformt. Eine maximale Geschwindigkeit der Transportbewegung 34'c beim Formen des Behälters wird durch den Formprozess des Behälters sowie notwendige Abbinde- und/oder Abkühlzeiten des Klebstoffs begrenzt. Das Förderelement 24'c zieht in Folge den aus dem Verpackungszuschnitt 12c gebildeten Behälter entlang des Transportwegs 18c in eine Position II, wo dieser von der Arbeitsstation 30"c befüllt wird. In Figur 6 ist weiter dargestellt, wie das Förderelement 24"c einen Transportschritt von der Position II in eine Position III ausführt. In der Position II ist das Förderelement 24"c dargestellt, das gerade den Behälter 14'c zur Position II gezogen hat. In Transportrichtung 16c neben dem Förderelement 24"c befindet sich der Behälter 14"c, der bereits in einem vorhergehenden Prozessschritt vom Förderelement 24'c an die Position II gezogen und von der Arbeitsstation 30"c befüllt wurde. Das Förderelement 24"c belässt nun den Behälter 14'c an der Position II, so dass in Folge dieser befüllt werden kann, und schiebt den Behälter 14"c an die Position III. In einem folgenden Prozessschritt wird entsprechend das Förderelement 24'c den Behälter 14'c an die Position III schieben. Entlang einer Teilstrecke 38"c sind Form- und Führungsmittel 40"c angeordnet, die als Deckellaschenführungen 62"c ausgebildet sind und die Behälter 14'c, 14"c zum Befüllen im Bereich der Arbeitsstation 30"c offen halten. Entlang des Transportwegs 18c schließt sich an die Arbeitsstation 30"c in der Position III eine weitere Arbeitsstation 30"'c an. Diese weist entlang einer Teilstrecke 38"'c weitere Form- und Führungsmittel 40'"c auf, die dazu vorgesehen sind, während des Transports entlang der Teilstrecke 38"'c des Transportwegs 18c die Behälter 14'c, 14"c zu verschließen. Dies erfolgt, wenn die Behälter 14'c, 14"c von der Position II an die Position III und über diese hinaus geschoben werden. Die Form- und Führungsmittel 40"'c sind so geformt, dass sie während des Transports entlang der Teilstrecke 38"'c Deckellaschen der Behälter 14'c, 14"c in Richtung einer Behältermitte umklappen und so die Behälter 14'c, 14"c schließen. Die Behälter 14'c, 14"c werden am Ende des Transportwegs 18c von weiteren, hier nicht dargestellten Förderelementen abtransportiert. Die beiden Förderelemente 24'c, 24"c führen den beschriebenen Bewegungsablauf abwechselnd durch und holen abwechselnd einen Verpackungszuschnitt 12c aus der Arbeitsstation 30'c ab und transportieren ihn entlang der Teilstrecke 22c des Transportwegs 18c. Eine Anzahl Behälter 14'c, 14"c, die während eines Zeitintervalls aus den Verpackungszuschnitten 12c geformt werden können, kann so durch den Einsatz von zwei Förderelementen 24c verdoppelt werden.

## Patentansprüche

1. Fördervorrichtung mit zumindest einer Transporteinheit (20a, 20'b-c, 20"b-c) zum Transport von Verpackungszuschnitten (12c) und/oder Behältern (14a, 14'a-c, 14"a-c, 14"'a) in einer Transportrichtung (16a-c) entlang eines Transportwegs (18a-c), wobei die Transporteinheit zumindest ein entlang einer Teilstrecke (22a-c) des Transportwegs (18a-c) antreibbares Förderelement (24a, 24'b-c, 24"b-c) aufweist, wobei das zumindest eine Förderelement (24a, 24'b-c, 24"b-c) eine Rückseite (26a, 26'b-c, 26"b-c), die in zumindest einem Betriebszustand dazu vorgesehen ist, Verpackungszuschnitte (12c) und/oder Behälter (14a, 14'a-c, 14"a-c, 14"'a) in der Transportrichtung (16a-c) zu ziehen, und eine Vorderseite (28a, 28'b-c, 28"b-c), die in zumindest einem Betriebszustand dazu vorgesehen ist, Verpackungszuschnitte (12c) und/oder Behälter (14a, 14'a-c, 14"a-c, 14"'a) in der Transportrichtung (16a-c) zu schieben, aufweist, wobei die Rückseite (26a, 26'b-c, 26"b-c) des zumindest einen Förderelements (24a, 24'b-c, 24"b-c) zumindest ein Halteelement (42a-b) aufweist, das dazu vorgesehen ist, auf zu ziehende Verpackungszuschnitte (12c) und/oder Behälter (14a, 14'a-c, 14"a-c, 14"'a) eine Zugkraft (44a) auszuüben, wobei das zumindest eine Förderelement (24a, 24'b-c, 24"b-c) in zumindest einem Betriebszustand dazu vorgesehen ist, gleichzeitig zumindest einen der Verpackungszuschnitte (12c) und/oder Behälter (14a, 14'a-c, 14"a-c, 14"'a-b) mit seiner Rückseite (26a, 26'b-c, 26"b-c) zu ziehen und zumindest einen weiteren Verpackungszuschnitt und/oder Behälter (14a, 14'a-c, 14"a-c, 14"'a) mit seiner Vorderseite (28a, 28'b-c, 28"b-c) zu schieben, und mit einer Lagereinheit (46a), die für einen Rücktransport des Förderelements (24a, 24'b-c, 24"b-c) entgegen der Transportrichtung (16a-c) das zumindest eine Förderelement (24a, 24'b-c, 24"b-c) an einer Führungseinheit (48a) der Transporteinheit (20a, 20'b-c, 20"b-c) aus einem Arbeitsbereich (50a) wegklappbar lagert, wobei die Lagereinheit (46a) das Förderelement (24a, 24'b-c, 24"b-c) um eine Schwenkachse (54a) beweglich an einem in und entgegen der Transportrichtung (16a-c) antreibbaren Schlitten (68a) der Transporteinheit (16a-c) lagert, wobei das Förderelement (24a, 24'b-c, 24"b-c) um die Schwenkachse (54a) der Lagereinheit (46a) in Transportrichtung (16a-c) umklappbar ist **dadurch gekennzeichnet, dass** das Förderelement (24a) zumindest einen Sensor (66a) aufweist, der dazu vorgesehen ist, während des Transports und/oder Rücktransports Verpackungszuschnitte (12c) und/oder Behälter (14a) im Arbeitsbereich (50a) zu erkennen.

2. Fördervorrichtung nach Anspruch 1, **dadurch gekennzeichnet, dass** das Förderelement (24a, 24'b-c, 24"b-c) dazu vorgesehen ist, die Verpackungszuschnitte (12c) und/oder Behälter (14a, 14'a-c, 14"a-c, 14"'a) in zumindest eine entlang des Transportwegs (18a-c) angeordnete und/oder an den Transportweg (18a-c) angrenzende Arbeitsstation (30'a-c, 30"a-c, 30"'c) einzubringen und/oder aus der zumindest einen Arbeitsstation (30'a-c, 30"a-c, 30"'c) zu entnehmen.

3. Fördervorrichtung nach Anspruch 2, **gekennzeichnet durch** eine Steuereinheit (32a-c), die dazu vorgesehen ist, in zumindest einem Betriebszustand eine Transportbewegung (34a-b, 34'b-c, 34"a, 34"c) des Förderelements (24a, 24'b-c, 24"b-c) zur Bildung einer Arbeitsbewegung (36'a, 36"a-b, 36c) mit der zumindest einen Arbeitsstation (30'a-c, 30"a-c, 30"'c) zu synchronisieren.

4. Fördervorrichtung nach einem der vorhergehenden Ansprüche, **gekennzeichnet durch** entlang zumindest einer Teilstrecke (38a, 38'c, 38"c, 38"'c) des Transportwegs (18a, 18c) angebrachte Form- und/oder Führungsmittel (40a, 40'c, 40"c, 40"'c), die dazu vorgesehen sind, Verpackungszuschnitte (12c) und/oder Behälter (14a, 14'a, 14'c, 14"a, 14"c, 14"'a) umzuformen und/oder zu führen.

5. Fördervorrichtung nach Anspruch 4, **dadurch gekennzeichnet, dass** das zumindest eine Förderelement (24'c, 24"c) dazu vorgesehen ist, unter Einwirkung der Form- und/oder Führungsmittel (40'c, 40"'c) während des Transports entlang der Teilstrecke (38'c, 38"'c) des Transportwegs (18c) aus Verpackungszuschnitten (12c) Behälter (14'c, 14"c) zu formen und/oder Behälter (14'c, 14"c) zu verschließen.

6. Fördervorrichtung nach einem der vorhergehenden Ansprüche, **dadurch gekennzeichnet, dass** das zumindest eine Förderelement (24'b, 24"b) dazu vorgesehen ist, in zumindest einem Betriebszustand Verpackungszuschnitte und/oder Behälter (14'b, 14"b) entgegengesetzt zur Transportrichtung (16b) mit seiner Rückseite (26'b, 26"b) zu schieben und/oder mit seiner Vorderseite (28'b, 28"b) zu ziehen.

7. Verfahren zum Transport von Verpackungszuschnitten (12c) und/oder Behältern (14a, 14'a-c, 14"a-c, 14"'a) mit einer Fördervorrichtung (10a-c), die zumindest eine Transporteinheit (20a, 20'b-c, 20"b-c) zum Transport von Verpackungszuschnitten (12c) und/oder Behältern (14a, 14'a-c, 14"a-c, 14"'a) in einer Transportrichtung (16a-c) entlang eines Transportwegs (18a-c) aufweist, wobei die Transporteinheit zumindest ein entlang einer Teilstrecke (22a-c) des Transportwegs (18a-c) antreibbares Förderelement (24a, 24'b-c, 24"b-c) aufweist, das eine Rückseite (26a, 26'b-c, 26"b-c), die in zumindest einem Betriebszustand dazu vorgesehen ist, Verpackungszuschnitte (12c) und/oder Behälter (14a, 14'a-c, 14"a-c, 14"'a) in der Transportrichtung (16a-c) zu ziehen, und eine Vorderseite (28a, 28'b-c, 28"b-c), die in zumindest einem Betriebszustand dazu vorgesehen ist, Verpackungszuschnitte (12c) und/oder Behälter (14a, 14'a-c, 14"a-c, 14"'a) in der Transportrichtung (16a-c) zu schieben, aufweist, wobei die Rückseite (26a, 26'b-c, 26"b-c) des zumindest einen Förderelements (24a, 24'b-c, 24"b-c) zumindest ein Halteelement (42a-b) aufweist, das dazu vorgesehen ist, auf zu ziehende Verpackungszuschnitte (12c) und/oder Behälter (14a, 14'a-c, 14"a-c, 14"'a) eine Zugkraft (44a) auszuüben, wobei in zumindest einem Verfahrensschritt ein oder mehrere Förderelemente (24a, 24'b-c, 24"b-c) jeweils einen oder mehrere Verpackungszuschnitte (12c) und/oder Behälter (14a, 14'a-c, 14"a-c, 14"'a) gleichzeitig mit ihrer Rückseite ziehend und mit ihrer Vorderseite schiebend entlang des Transportwegs (18a-c) zwischen Arbeitsstationen (30'a-c, 30"a-c. 30"'c) transportieren, **dadurch gekennzeichnet, dass** in zumindest einem Verfahrensschritt das zumindest eine Förderelement (24a, 24'b-c, 24"b-c) an einer Führungseinheit (48a) der Transporteinheit (20a, 20'b-c, 20"b-c) für einen Rücktransport des Förderelements (24a, 24'b-c, 24"b-c) entgegen der Transportrichtung (16a-c) mittels einer Lagereinheit (46a) der Fördervorrichtung aus einem Arbeitsbereich (50a) weggeklappt wird, wobei das Förderelement (24a) zumindest einen Sensor (66a) aufweist, der während des Transports und/oder Rücktransports Verpackungszuschnitte (14c) und/oder Behälter (14a) im Arbeitsbereich (50a) erkennt.

8. Verfahren nach Anspruch 7, **dadurch gekennzeichnet, dass** das zumindest eine Halteelement (42a) als Saugnapf ausgebildet ist, das über eine Unterdruckquelle und eine Druckleitung mit einem Unterdruck beaufschlagt ist, wobei in einem ersten Verfahrensschritt das Förderelement (24a) einen entgegen der Transportrichtung (16a) gesehenen zweiten Behälter (14"a) von einer Position (I) aus einer Arbeitsstation (30'a) in einen Bereich zwischen der Arbeitsstation (30'a) und einer zweiten Arbeitsstation (30"a) zu einer Position (II) zieht, wobei sich ein erster Behälter (14'a) bereits in der zweiten Arbeitsstation (30"a) befindet, wobei die Übernahme des Behälters (14"a) in der Position (I) synchron mit der Arbeitsbewegung (36'a) der Arbeitsstation (30'a) erfolgt, wobei in einem zweiten Verfahrensschritt das Förderelement (24a) in einer Position (III) gleichzeitig den Behälter (14"a) mit seiner Rückseite (26a) in die Arbeitsstation (30"a) hinein zieht und in der gleichen Transportbewegung (34a) den weiteren Behälter (14'a) aus der Arbeitsstation (30"a) heraus schiebt, wobei eine Geschwindigkeit der Transportbewegung (34a) zunächst zu einer verlangsamten Transportbewegung (34"a) reduziert wird, so dass der weitere Behälter (14'a) mit einer geringen Geschwindigkeit kontaktiert wird und ein harter Aufprall des Förderelements (24a) auf den weiteren Behälter (14'a) vermieden wird, wobei die Geschwindigkeit der Transportbewegung (34a) nun wieder erhöht wird, um den weiteren Behälter (14'a) weiter in Transportrichtung (16a) zu bewegen, wobei der Behälter (14"a) gleichzeitig weiter in die Arbeitsstation (30"a) gezogen wird, bis er die Position (III) erreicht hat, wobei nun ein Druck im Halteelement (42a) durch Belüftung von Saugnäpfen an einen Umgebungsdruck angeglichen wird, so dass eine Zugkraft (44a) aufgehoben wird und der Behälter (14"a) in Position (III) verbleibt.

9. Verpackungsmaschine (52a-c), insbesondere Kartoniermaschine, mit einer Fördervorrichtung (10a-c) nach einem der Ansprüche 1 - 6.

## Claims

1. Conveying device with at least one transport unit (20a, 20'b-c, 20"b-c) for the transport of packaging blank cuts (12c) and/or containers (14a, 14'a-c, 14"a-c, 14"'a) in a transport direction (16a-c) along a transport path (18a-c), the transport unit comprising at least one conveying element (24a, 24'b-c, 24"b-c) that is drivable along a subsection (22a-c) of the transport path (18a-c), the at least one conveying element (24a, 24'b-c, 24"b-c) having a rear side (26a, 26'b-c, 26"b-c), which is in at least one operation state configured to pull packaging blank cuts (12c) and/or containers (14a, 14'a-c, 14"a-c, 14"'a) in the transport direction (16a-c), and having a front side (28a, 28'b-c, 28"b-c), which is in at least one operation state configured to push packaging blank cuts (12c) and/or containers (14a, 14'a-c, 14"a-c, 14"'a) in the transport direction (16a-c),
the rear side (26a, 26'b-c, 26"b-c) of the at least one conveying element (24a, 24'b-c, 24"b-c) comprising at least one holding element (42a-b) that is configured to exert a pull force (44a) onto packaging blank cuts (12c) and/or containers (14a, 14'a-c, 14"a-c, 14"'a) which are to be pulled,
wherein the at least one conveying element (24a, 24'b-c, 24"b-c) is configured, in at least one operation state, to simultaneously pull at least one of the packaging blank cuts (12c) and/or containers (14a, 14'a-c, 14"a-c, 14"'a) with its rear side (26a, 26'b-c, 26"b-c) and push at least one further packaging blank cut (12c) and/or container (14a, 14'a-c, 14"a-c, 14"'a) with its front side (28a, 28'b-c, 28"b-c),
and with a support unit (46a) which, for a return transport of the conveying element (24a, 24'b-c, 24"b-c) counter to the transport direction (16a-c), supports the at least one conveying element (24a, 24'b-c, 24"b-c) on a guiding unit (48a) of the transport unit (20a, 20'b-c, 20"b-c) in such a way that it is foldable away out of a work zone (50a),
wherein the support unit (46a) supports the conveying element (24a, 24'b-c, 24"b-c) on a carriage (68a) of the transport unit (16a-c) that is drivable in and counter the transport direction (16a-c) such that it is movable about a pivot axis (54a),
the conveying element (24a, 24'b-c, 24"b-c) being foldable about the pivot axis (54a) of the support unit (46a) in the transport direction (16a-c), **characterised in that** the conveying element (24a) comprises at least one sensor (66a) which is configured for identifying packaging blank cuts (12c) and/or containers (14a) in the work zone (50a) during the transport or the return transport.

2. Conveying device according to claim 1,
**characterised in that** the conveying element (24a, 24'b-c, 24"b-c) is configured to bring the packaging blank cuts (12c) and/or the containers (14a, 14'a-c, 14"a-c, 14"'a) into at least one work station (30'a-c, 30"a-c, 30"'c) that is arranged along the transport path (18a-c) and/or adjoins the transport path (18a-c), and/or to remove the packaging blank cuts (12c) and/or the containers (14a, 14'a-c, 14"a-c, 14"'a) out of the at least one work station (30'a-c, 30"a-c, 30"'c).

3. Conveying device according to claim 2,
**characterised by** a control unit (32a-c) that is configured, in at least one operation state, to synchronize a transport movement (34a-b, 34'b-c, 34"a, 34"c) of the conveying element (24a, 24'b-c, 24"b-c) with the at least one work station (30'a-c, 30"a-c, 30"'c) for the purpose of creating a work movement (36'a, 36"a-b, 36c).

4. Conveying device according to one of the preceding claims,
**characterised by** forming and/or guiding means (40a, 40'c, 40"c, 40"'c), which are mounted along at least one subsection (38a, 38'c, 38"c, 38"'c) of the transport path (18a, 18c) and are configured for a forming and/or guidance of packaging blank cuts (12c) and/or containers (14a, 14'a, 14'c, 14"a, 14"c, 14"'a).

5. Conveying device according to claim 4,
**characterised in that** the at least one conveying element (24'c, 24"c) is configured, during the transport along the subsection (38'c, 38"'c) of the transport path (18c) and under the influence of the forming and/or guiding means (40'c, 40"'c), to form containers (14'c, 14"c) from packaging blank cuts (12c) and/or to close containers (14'c, 14"c).

6. Conveying device according to one of the preceding claims,
**characterised in that** the at least one conveying element (24'b, 24"b) is configured, in at least one operation state, to pull packing bank cuts and/or containers (14'b, 14"b) counter to the transport direction (16b) with its rear side (26'b, 26"b) and/or to pull them with its front side (28'b, 28"b).

7. Method for the transport of packaging blank cuts (12c) and/or containers (14a, 14'a-c, 14"a-c, 14"'a), with a conveying device (10a-c) comprising at least one transport unit (20a, 20'b-c, 20"b-c) for the transport of packaging blank cuts (12c) and/or containers (14a, 14'a-c, 14"a-c, 14"'a) in a transport direction (16a-c) along a transport path (18a-c), the transport unit comprising at least one conveying element (24a, 24'b-c, 24"b-c) that is drivable along a subsection (22a-c) of the transport path (18a-c),
the at least one conveying element (24a, 24'b-c, 24"b-c) having a rear side (26a, 26'b-c, 26"b-c), which is in at least one operation state configured to pull packaging blank cuts (12c) and/or containers (14a, 14'a-c, 14"a-c, 14"'a) in the transport direction (16a-c), and having a front side (28a, 28'b-c, 28"b-c), which is in at least one operation state configured to push packaging blank cuts (12c) and/or containers (14a, 14'a-c, 14"a-c, 14"'a) in the transport direction (16a-c), the rear side (26a, 26'b-c, 26"b-c) of the at least one conveying element (24a, 24'b-c, 24"b-c) comprising at least one holding element (42a-b) that is configured to exert a pull force (44a) onto packaging blank cuts (12c) and/or containers (14a, 14'a-c, 14"a-c, 14"'a) which are to be pulled, wherein in at least one method step a conveying element (24a, 24'b-c, 24"b-c) or a plurality of conveying elements (24a, 24'b-c, 24"b-c) is/are configured to transport respectively one or a plurality of packaging blank cuts (12c) and/or containers (14a, 14'a-c, 14"a-c, 14"'a) along the transport path (18a-c) between work stations (30'a-c, 30"a-c, 30"'c) by simultaneously pulling with its/their rear side/s and pushing with its/their front side/s,
**characterised in that** in at least one method step, for a return transport of the conveying element (24a, 24'b-c, 24"b-c) counter to the transport direction (16a.c), the at least one conveying element (24a, 24'b-c, 24"b-c) is folded away out of a work zone (50a) on a guiding unit (48a) of the transport unit (20a, 20'b-c, 20"b-c) by means of a support unit (46a) of the conveying device,
wherein the conveying element (24a) comprises at least one sensor (66a) identifying packaging blank cuts (14c) and/or containers (14a) in the work zone (50a) during the transport and/or the return transport.

8. Method according to claim 7, **characterised in that** the at least one holding element (42a) is embodied as a suction cup, and is subject to a negative pressure applied by a negative pressure source via a pressure conduit, wherein in a first method step the conveying element (24a) pulls a container (14"a), which is a second container (14"a) when viewed counter to the transport direction (16a), from a position (I) out of a work station (30'a) into a region between the work station (30'a) and a second work station (30"a) to a position (II), a first container (14'a) being already situated in the second work station (30"a) and a take-over of the container (14"a) being effected in the position (I) synchronously with the work movement (36'a) of the work station (30'a),
wherein in a second method step the conveying element (24a), in its position (III), simultaneously pulls the container (14"a) into the work station (30"a) with its rear side (26a) and in the same transport movement (34a) pushes the further container (14'a) out of the work station (30"a),
wherein a speed of the transport movement (34a) is first reduced to a slowed-down transport movement (34"a), which leads to the further container (14'a) being contacted with a lower speed and a hard impact of the conveying element (24a) onto the further container (14'a) being avoided, the speed of the transport movement (34a) now being increased again for moving the container (14'a) farther on in the transport direction (16a), the container (14"a) being simultaneously pulled farther into the work station (30"a) until reaching the position (III),
a pressure in the holding element (42a) being now adjusted to an ambient pressure by ventilating the suction cups, such that a pull force (44a) is compensated and the container (14"a) remains in the position (III).

9. Packaging machine (52a-c), in particular cartoning machine, with a conveying device (10a-c) according to one of claims 1 to 6.

## Revendications

1. Dispositif transporteur avec au moins une unité de transport (20a, 20'b-c, 20"b-c) pour le transport de blancs d'emballage (12c) et/ou de récipients (14a, 14'a-c, 14"a-c, 14"'a) dans une direction de transport (16a-c) le long d'un chemin de transport (18a-c), l'unité de transport comprenant au moins un élément de transport (24a, 24'b-c, 24"b-c) qui est entraînable le long d'un tronçon (22a-c) du chemin de transport (18a-c),
l'au moins un élément de transport (24a, 24'b-c, 24"b-c) présentant une face arrière (26a, 26'b-c, 26"b-c) qui est prévue, dans au moins un état d'opération, à tirer des blancs d'emballage (12c) et/ou des récipients (14a, 14'a-c, 14"a-c, 14"'a) dans la direction de transport (16a-c), et présentant une face frontale (28a, 28'b-c, 28"b-c) qui est prévue, dans au moins un état d'opération, à pousser des blancs d'emballage (12c) et/ou des récipients (14a, 14'a-c, 14"a-c, 14"'a) dans la direction de transport (16a-c),
la face arrière (26a, 26'b-c, 26"b-c) de l'au moins un élément de transport (24a, 24'b-c, 24"b-c) comprenant au moins un élément de retenue (42a-b) qui est prévu à exercer une force de traction (44a) sur des blancs d'emballage (12c) et/ou des récipients (14a, 14'a-c, 14"a-c, 14"'a) qui sont à tirer,
l'au moins un élément de transport (24a, 24'b-c, 24"b-c) étant prévu, dans au moins un état d'opération, à simultanément tirer par sa face arrière (26a, 26'b-c, 26"b-c) au moins un des blancs d'emballage (12c) et/ou des récipients (14a, 14'a-c, 14"a-c, 14"'a) et à pousser par sa face frontale (28a, 28'b-c, 28"b-c) au moins un autre blanc d'emballage et/ou récipient (14a, 14'a-c, 14"a-c, 14"'a),
et avec une unité de support (46a) qui, pour un transport de retour de l'élément de transport (24a, 24'b-c, 24"b-c) contre la direction de transport (16a-c), supporte l'au moins un élément de transport (24a, 24'b-c, 24"b-c) sur une unité de guidage (48a) de l'unité de transport (20a, 20'b-c, 20"b-c) de telle manière qu'il est dépliable hors d'une zone de travail (50a),
l'unité de support (46a) supportant l'élément de transport (24a, 24'b-c, 24"b-c) sur un chariot (68a) de l'unité de transport (16a-c) qui est entraînable dans et contre la direction de transport (16a-c) de telle façon que ledit élément de transport (24a, 24'b-c, 24"b-c) est mobile autour d'un axe de pivotement (54a),
l'élément de transport (24a, 24'b-c, 24"b-c) étant dépliable autour de l'axe de pivotement (54a) de l'unité de support (46a) dans la direction de transport (16a-c),
**caractérisé en ce que** l'élément de transport (24a, 24'b-c, 24"b-c) comprend au moins un capteur (66a) qui est prévu, pendant le transport et/ou le transport de retour, à identifier des blancs d'emballage (12c) et/ou des récipients (14a) dans la zone de travail (50a).

2. Dispositif transporteur selon la revendication 1,
**caractérisé en ce que** l'élément de transport (24a, 24'b-c, 24"b-c) est prévu à alimenter les blancs d'emballage (12c) et/ou récipients (14a, 14'a-c, 14"a-c, 14"'a) dans au moins un poste de travail (30'a-c, 30"a-c, 30"'c) agencé le long du chemin de transport (18a-c) et/ou adjacent au chemin de transport (18a-c) et/ou à enlever les blancs d'emballage (12c) et/ou récipients (14a, 14'a-c, 14"a-c, 14"'a) de l'au moins un poste de travail (30'a-c, 30"a-c, 30"').

3. Dispositif transporteur selon la revendication 2,
**caractérisé par** une unité de commande (32a-c) qui est prévue dans au moins un état d'opération à synchroniser un mouvement de transport (34a-b, 34'b-c, 34"a, 34"c) de l'élément de transport (24a, 24'b-c, 24"b-c) avec l'au moins un poste de travail (30'a-c, 30"a-c, 30"'c) pour générer un mouvement de travail (36'a, 36"a-b, 36c).

4. Dispositif transporteur selon l'une quelconque des revendications précédentes,
**caractérisé par** des moyens de formage et/ou guidage (40a, 40'c, 40"c, 40"'c) qui sont prévus pour déformer et/ou guider des blancs d'emballage (12c) et/ou des récipients (14a, 14'a, 14'c, 14"a, 14"c, 14"'a) qui sont montés le long d'au moins un tronçon (38a, 38'c, 38"c, 38"'c) du chemin de transport (18a, 18c).

5. Dispositif transporteur selon la revendication 4,
**caractérisé en ce que** l'au moins un élément de transport (24'c, 24"c) est prévu sous l'action des moyens de formage et/ou guidage (40'c, 40"'c), pendant le transport le long du tronçon (38'c, 38"'c) du chemin de transport (18c), à former des récipients (14'c, 14"c) des blancs d'emballage (12c) et/ou à fermer des récipients (14'c, 14"c).

6. Dispositif transporteur selon l'une quelconque des revendications précédentes,
**caractérisé en ce que** l'au moins un élément de transport (24'b, 24"b) est prévu, dans au moins un état d'opération, à pousser des blancs d'emballage et/ou des récipients (14'b, 14"b) contre la direction de transport (16b) par sa face arrière (26'b, 26"b) et/ou à tirer des blancs d'emballage et/ou des récipients (14'b, 14"b) par sa face frontale (28'b, 28"b).

7. Procédé pour le transport de blancs d'emballage (12c) et/ou de récipients (14a, 14'a-c, 14"a-c, 14"'a), avec un dispositif transporteur (10a-c) comprenant au moins une unité de transport (20a, 20'b-c, 20"b-c) pour le transport de blancs d'emballage (12c) et/ou de récipients (14a, 14'a-c, 14"a-c, 14"'a) dans une direction de transport (16a-c) le long d'un chemin de transport (18a-c),
l'unité de transport comprenant au moins un élément de transport (24a, 24'b-c, 24"b-c) qui est entraînable le long d'un tronçon (22a-c) du chemin de transport (18a-c),
ledit élément de transport (24a, 24'b-c, 24"b-c) présentant une face arrière (26a, 26'b-c, 26"b-c) qui est prévue, dans au moins un état d'opération, à tirer des blancs d'emballage (12c) et/ou des récipients (14a, 14'a-c, 14"a-c, 14"'a) dans la direction de transport (16a-c), et présentant une face frontale (28a, 28'b-c, 28"b-c) qui est prévue, dans au moins un état d'opération, à pousser des blancs d'emballage (12c) et/ou des récipients (14a, 14'a-c, 14"a-c, 14"'a) dans la direction de transport (16a-c),
la face arrière (26a, 26'b-c, 26"b-c) de l'au moins un élément de transport (24a, 24'b-c, 24"b-c) comprenant au moins un élément de retenue (42a-b) qui est prévu à exercer une force de traction (44a) sur des blancs d'emballage (12c) et/ou des récipients (14a, 14'a-c, 14"a-c, 14"'a), où, dans au moins une étape de procédé, un ou plusieurs élément(s) de transport (24a, 24'b-c, 24"b-c) chacun transportent un ou plusieurs blancs d'emballage (12c) et/ou récipients (14a, 14'a-c, 14"a-c, 14"'a) qui sont à tirer le long du chemin de transport (18a-c) entre des postes de travail (30'a-c, 30"a-c, 30"'c) en simultanément tirant par sa face arrière et poussant par sa face frontale,
**caractérisé en ce que** dans au moins une étape de procédé, pour un transport de retour de l'élément de transport (24a, 24'b-c, 24"b-c) contre la direction de transport (16a-c), l'au moins un élément de transport (24a, 24'b-c, 24"b-c) est déplié, sur une unité de guidage (48a) de l'unité de transport (20a, 20'b-c, 20"b-c), hors d'une zone de travail (50a) par le biais d'une unité de support (46a) du dispositif transporteur,
l'élément de transport (24a) comprenant au moins un capteur (66a) qui identifie des blancs d'emballage (14c) et/ou des récipients (14a) dans la zone de travail (50a).

8. Procédé selon la revendication 7,
**caractérisé en ce que** l'au moins un élément de retenue (42a) est réalisé comme ventouse et est pourvu d'une pression négative via une source de pression négative et un conduit de pression,
où dans une première étape de procédé l'élément de transport (24a) tire un récipient (14"a), qui est un deuxième récipient (14"a) vu contre la direction de transport (16a), d'une position (I) hors d'un poste de travail (30'a) dans une zone entre le poste de travail (30'a) et un deuxième poste de travail (30"a) jusqu'à une position (II), un premier récipient (14'a) étant déjà situé dans le deuxième poste de travail (30"a), et un transfert du récipient (14"a) étant mis en œuvre dans la position (I) en synchrone avec le mouvement de travail (36'a) du poste de travail (30'a),
où dans une deuxième étape de procédé l'élément de transport (24a) dans une position (III) simultanément tire le récipient (14"a) dans le poste de travail (30"a) utilisant sa face arrière (26a) et, dans le même mouvement de travail (34a), pousse l'autre récipient (14'a) hors du poste de travail (30"a), une vélocité du mouvement de transport (34a) étant premièrement réduite à un mouvement de transport ralenti (34"a), de sorte que l'autre récipient (14'a) soit contacté avec une vélocité inférieure et un heurt dur de l'élément de transport (24a) sur l'autre récipient (14'a) soit évité,
une vélocité du mouvement de transport (34a) étant re-augmentée pour mouver l'autre récipient (14'a) en plus dans la direction de transport (16a),
le récipient (14"a) étant en même temps tiré en plus dans le poste de travail (30"a) jusqu'à ce qu'il atteigne la position (III),
une pression dans l'élément de retenue (42a) étant alors adaptée à une pression ambiante par une ventilation des ventouses, de sorte qu'une force de traction (44a) soit annulée et le récipient (14"a) reste dans la position (III).

9. Machine d'emballage (52a-c), en particulier machine de cartonnage, avec un dispositif transporteur (10a-c) selon l'une des revendications 1 à 6.
